# EUROPEAN PATENT SPECIFICATION

(11) **EP 0 930 195 B1**
(45) Date of publication and mention of the grant of the patent: **04.02.2004**
(21) Application number: 99500004.9
(22) Date of filing: 12.01.1999
(51) Int. Cl.: B60N 2/28

(54) **Tightening device for a safety belt which fastens a child seat to a vehicle seat**
Spannvorrichtung für einen Sicherheitsgurt der einen Kindersitz an einen Fahrzeugsitz befestigt
Dispositif de serrage de la ceinture de sécurité qui fixe un siège d'enfant à un siège d'un véhicule automobile

(30) Priority: 14.01.1998 ES 9800062 U
(43) Date of publication of application: 21.07.1999
(73) Proprietor: PLAY, S.A., 08184 Palau de Plegamans (Barcelona) (ES)
(72) Inventor: Jane Stopp, Joaquin Poligon Ind.Riera de Caldes, 08184 Palau de Plegamans (Barcelona) (ES)
(74) Representative: Ponti Sales, Adelaida

(56) References cited:
- ES-U- 1 035 406
- NL-A- 9 201 526
- US-A- 4 500 133
- US-A- 5 426 827

## Description

The present invention relates to a tightening device of the safety belt fastening a child seat to a vehicle seat, of the type which permits additional tightening of the belt once it has been attached.

### BACKGROUND OF THE INVENTION

There exist at present child seats which are fastened to the seat of a vehicle by means of the vehicle's seat belt for that seat. This fastening or anchoring system permits fast and easy fitting and removal of the child seat.

It can nevertheless occur that the seat belt is not fully tightened once the child seat has been attached, or that it has a certain amount of free play due to the seat on which it is placed not being rigid; the tension of the seat belt, which exerts the force fastening the child seat to the vehicle seat, is solely that provided by the conventional belt mechanism, which was in fact designed for another function and is not always sufficient to anchor the child seat firmly.

In order to overcome these disadvantages and provide a simple and fast anchorage which is at the same time more firm and reliable, the Applicant developed a system for fastening a child seat to a vehicle seat that further comprises a seat belt tightening device, and constitutes the object of utility model U 9602674 (ES1035406Y patent).

This known device is associated to the rigid frame of the child seat and includes a tightening element which engages the seat belt and an actuator which shifts the tightening element between a neutral position and an active position in which the seat belt is subjected to an additional tightening. The device of the above model also comprises locking means, made up of a through-pin which moves transversally to the child seat and is fitted into a corresponding orifice made in the actuator.

The Applicant has now found that the safety and handling functionality of the tightening device can be improved by means of a new locking system.

### DESCRIPTION OF THE INVENTION

One object of the present invention is therefore to provide an improved tightening device in which the locking is reliable and does not run the risk of becoming released accidentally, and is at the same time easier to handle during the operations of fitting the child seat in the vehicle and removing it from the vehicle.

In accordance with this object, the tightening device of the present invention is of the type described in the aforesaid utility model, and is characterised in that said locking means comprise a stepped rod, which extends through an opening formed in a bar of the child seat frame, and a spring arranged around the rod and pressed between a shoulder of the rod and an interior surface of said bar, said spring pushing the rod towards a position of interference with the travel path of the actuator, one end of the rod having a widened zone which constitutes an unlocking button for causing axial movement thereof against the action of said spring to a position of non-interference with the travel path of the actuator.

These constructional characteristics make the tightening device very reliable, thanks to the rod that prevents return of the actuator to the position in which the belt is untightened and thanks to the spring that keeps the rod in this locked position; but at the same time the actuator can be moved easily from one position to another, whenever desired, without having to align a through-pin with some orifices, as in the previous art, and exerting just a small force, because thanks to the presence of the spring the rod can be mounted loosely.

In a preferred embodiment, the other end of the rod has a lip which remains outside the tubular bar of the frame and acts as an abutment for the locked position of the rod, and preferably said lip is formed by clinching the end of the rod.

The assembly of the rod in the bar is thus extremely simple.

Advantageously, said stepped rod has a first portion which is guided to slide in a first opening of complementary shape formed in said tubular bar, and a second portion, of smaller section than that of the first portion, which is guided to slide in a second opening of complementary shape made in said tubular bar and aligned with said first opening.

Also advantageously, said first portion is of substantially square cross section and said second portion is of substantially round cross section.

According to a preferred structural feature, the first portion of the rod and the unlocking button form a single moulded piece of plastic material, and said second portion is constituted by a metal rod attached to said piece of plastic material.

This arrangement facilitates the manufacture and allows to obtain an element with a good finishing and with a suitable anatomic shape for the button.

Preferably the unlocking button has at least in part a concave shape on its side oriented towards the bar. The opening in the bar is thus relatively protected.

In one embodiment of the tightening device, the actuator has an elongate cavity and is mounted with said cavity surrounding loosely the bar of the frame; said unlocking button has a shape such that the actuator itself moves the rod when it comes into contact with the button during movement from the neutral position to the active position, and so that the actuator remains locked by the rod once it reaches said active position.

Thus, in order to shift to the active position the user only has to move the actuator, which will then remain automatically locked.

### BRIEF DESCRIPTION OF THE DRAWINGS

For a better understanding of all that has been set out some drawings are included which show, schematically and solely by way of non-restrictive example, a practical case of embodiment.

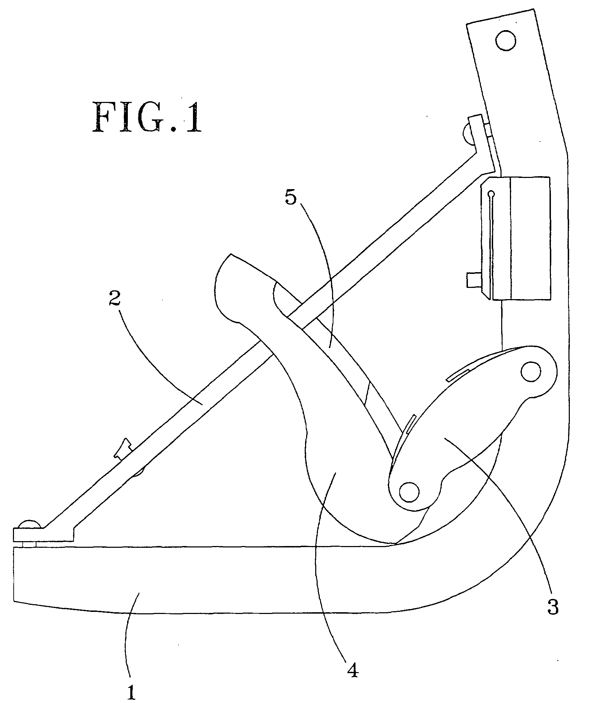

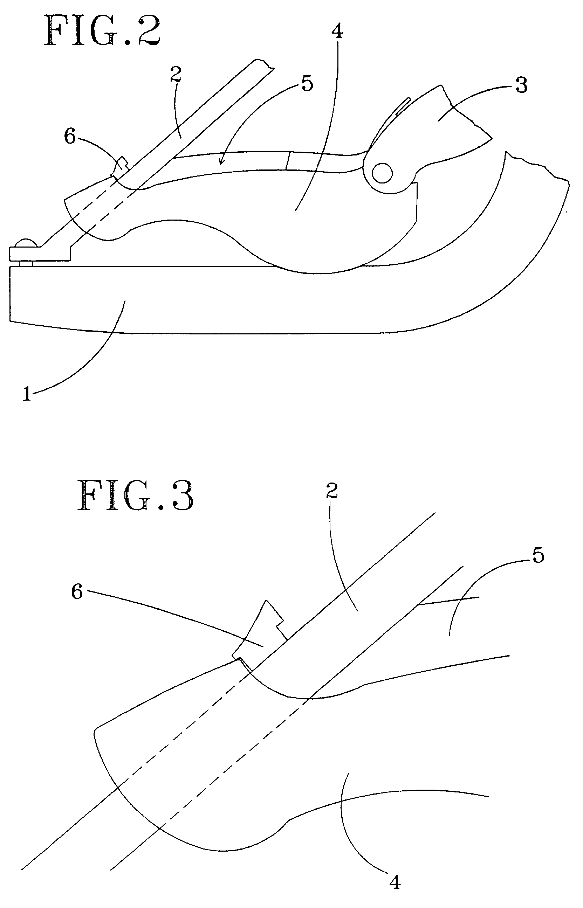

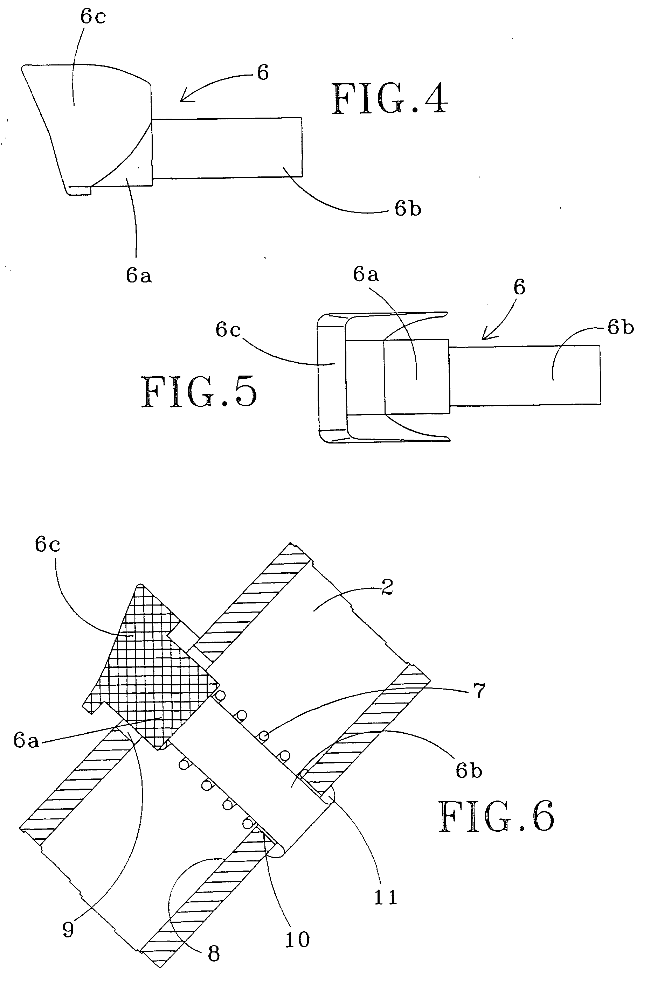

In said drawings, Figure 1 is a partial view in side elevation of the device of this invention applied to the structure of a child seat, in the inactive position; Figure 2 is a partial view of the device in the active position; Figure 3 is an enlarged detail of Figure 2, showing locking of the actuator; Figures 4 and 5 are a plan view from below and a side elevation view, respectively, of the stepped rod; and Figure 6 is a section view of the assembly of the rod and the spring in the structure of the child seat.

### DESCRIPTION OF A PREFERRED EMBODIMENT

A child seat is fastened to a vehicle seat by means of the vehicle's seat belt, as described in utility model U 9602674 (ES1035406Y patent).

Appended Figure 1 shows part of the frame 1 of the child seat, which is intended to rest on the vehicle seat and be immobilised by the seat belt. As the Figure shows, the frame includes an inclined bar 2, and the tightening device comprises a tightening element 3 and a actuator 4, which in this Figure are in a neutral or inactive position.

As foreseen in the above cited model, the seat belt (not shown) is engaged by the tightening device 3, and is submitted to additional tightening when the tightening device is shifted to an active position by the movement of the actuator 4, which subsequently remains in the position shown in Figure 2.

In the preferred embodiment shown in the Figures, the actuator 4 is structured as a lever articulated on the tightening device 3 and provided with an elongate cavity 5 inside which the bar 2 of the frame fits loosely.

In accordance with the invention, in order to prevent the device from returning accidentally to the position of Figure 1 after being placed in its active position, locking means have been provided attached to the bar 2 of the frame; they will be described below with reference to Figures 4, 5 and 6.

The locking means are constituted by a stepped rod 6 which includes a first portion 6a of larger section and a second portion 6b of smaller section, and which extends through the bar 2 of the child seat frame, and by a coil spring 7 which is arranged around the portion 6b of the rod, so that it rests against the shoulder formed by portion 6a and against the interior wall 8 of the bar 2, keeping the rod urged towards the left as shown in Figure 6.

In the embodiment shown, portion 6a of the rod is of square section and extends through a corresponding square opening 9 in the bar 2, while portion 6b is of round section and extends through a corresponding opening 10 in the wall of the bar 2, also round and obviously aligned with opening 9.

The free end of portion 6b of the rod is clinched to form a lip 11, which abuts against the exterior wall of the bar 2 to prevent the rod from coming out of the openings.

The free end of portion 6a, in its turn, ends in a widened zone 6c which constitutes an unlocking button. By pressing on this button the user can move the rod 6 against the action of the spring 7, in such a way that it projects less with respect to the bar 2, and keep it in this position, so as to allow the actuator 4 to shift to the neutral position. The button itself acts as an abutment to the movement of the rod in that direction.

Figures 4 and 5 show the specific shape of the rod 6, and in particular the anatomical shape of the button 6c. Preferably, zones 6a and 6c of the rod constitute a single moulded piece of plastic material, while portion 6b is a hollow finished bar or a tubular bar, made of metal, so that it can be clinched to form the lip 11.

As can be deduced from the description and the drawings, the locking system of the invention is extremely easy and convenient to use, while at the same time it is virtually impossible for the actuator 4, and therefore the tightening device 3, to become unlocked accidentally.

Although this specification shows and describes a specific embodiment of the invention, it is obvious that the fastening system described allows several possible modifications and variants which don't depart from the scope of protection defined by the attached claims.

## Claims

1. Tightening device of the safety belt fastening a child seat to a vehicle seat, comprising a child seat (1), tightening element (3), an actuator (4) for shifting said tightening element between a neutral position and an active position, and means for locking the actuator in the active position, **characterised in that** said locking means comprise a stepped rod (6), which extends through an opening (9,10) formed in a bar (2) of the child seat frame (1), and a spring (7) arranged around the rod and pressed between a shoulder of the rod and an interior surface (8) of said bar, said spring pushing the rod towards a position of interference with the travel path of the actuator (4), one end of the rod having a widened zone (6c) which constitutes an unlocking button for causing axial movement thereof against the action of said spring (7) to a position of non-interference with the travel path of the actuator (4).

2. Tightening device as claimed in Claim 1, **characterised in that** the other end of the rod (6) has a lip (11) which remains outside the bar (2) of the frame and acts as an abutment for the locked position of the rod.

3. Tightening device as claimed in Claim 2, **characterised in that** said lip (11) is formed by clinching the end of the rod (6).

4. Tightening device as claimed in any of the previous claims, **characterised in that** said stepped rod (6) has a first portion ( 6a) which is guided to slide in a first opening (9) of complementary shape formed in said bar (2), and a second portion (6b), of smaller section than that of the first portion, which is guided to slide in a second opening (10) of complementary shape made in said bar (2) and aligned with said first opening (9).

5. Tightening device as claimed in Claim 4, **characterised in that** said first portion ( 6a) is of substantially square cross section and said second portion (6b) is of substantially round cross section.

6. Tightening device as claimed in either of Claims 4 or 5, **characterised in that** the first portion (6a) of the rod (6) and the unlocking button (6c) form a single moulded piece of plastic material, and said second portion (6b) is constituted by a metal rod attached to said piece of plastic material.

7. Tightening device according to any of the previous claims, **characterised in that** the unlocking button (6c) has at least in part a concave shape on its side oriented towards the bar (2).

8. Tightening device as claimed in any of the above claims, **characterised in that** the actuator (4) has an elongate cavity (5) and is mounted with said cavity surrounding loosely the bar (2) of the frame, and **in that** said unlocking button (6c) has a shape such that the actuator itself moves the rod (6) when it comes into contact with the button during movement from the neutral position to the active position, and so that the actuator (4) remains locked by the rod (6) once it reaches said active position.

## Patentansprüche

1. Spannvorrichtung für einen Sicherheitsgurt, welcher einen Kindersitz an einem Fahrzeugsitz befestigt, mit einem Spannelement (3), einer Betätigungseinrichtung (4) zum Bewegen des Spannelements zwischen einer neutralen Stellung und einer aktiven Stellung und einer Einrichtung zum Verriegeln der Betätigungseinrichtung in der aktiven Stellung, **dadurch gekennzeichnet, dass** die Verriegelungseinrichtung eine gestufte Stange (6), welche sich durch eine Öffnung (9, 10) erstreckt, die in einem Träger (2) des Kindersitzrahmens (1) gebildet ist, und eine Feder (7) aufweist, welche um die Stange angeordnet und zwischen einem Absatz der Stange und einer inneren Oberfläche (8) des Trägers gespannt ist, wobei die Feder die Stange in Richtung einer Überlagerungsstellung mit dem Arbeitsweg der Betätigungseinrichtung (4) drückt, wobei ein Ende der Stange einen aufgeweiteten Bereich (6c) aufweist, welcher einen Entriegelungsknopf zum Veranlassen einer axialen Bewegung derselben entgegen der Wirkung der Feder (7) in eine Nichtüberlagerungsstellung mit dem Arbeitsweg der Betätigungseinrichtung (4) aufweist.

2. Spannvorrichtung nach Anspruch 1, **dadurch gekennzeichnet, dass** das andere Ende der Stange (6) eine Lippe (11) aufweist, welche außerhalb des Trägers (2) des Rahmens verbleibt und als ein Anschlag für die verriegelte Stellung der Stange dient.

3. Spannvorrichtung nach Anspruch 2, **dadurch gekennzeichnet, dass** die Lippe (11) durch Stauchen des Endes der Stange (6) gebildet ist.

4. Spannvorrichtung nach einem der vorangehenden Ansprüche, **dadurch gekennzeichnet, dass** die gestufte Stange (6) einen ersten Abschnitt (6a), welcher zum Gleiten in einer ersten Öffnung (9) komplementärer Form geführt ist, welche in dem Träger (2) gebildet ist, und einen zweiten Abschnitt (6b) eines kleineren Querschnitts als der des ersten Abschnitts aufweist, welcher zum Gleiten in einer zweiten Öffnung (10) komplementärer Form geführt ist, welche in dem Träger (2) vorgesehen ist und mit der ersten Öffnung (9) flüchtet.

5. Spannvorrichtung nach Anspruch 4, **dadurch gekennzeichnet, dass** der erste Abschnitt (6a) einen im wesentlichen quadratischen Querschnitt aufweist und der zweite Abschnitt (6b) einen im wesentlichen runden Querschnitt aufweist.

6. Spannvorrichtung nach einem der Ansprüche 4 oder 5, **dadurch gekennzeichnet, dass** der erste Abschnitt (6a) der Stange (6) und der Entriegelungsknopf (6c) ein einzelnes Gussstück aus einem Plastikmaterial bilden, und der zweite Abschnitt (6b) durch eine Metallstange gebildet ist, die an dem Stück aus Plastikmaterial angebracht ist.

7. Spannvorrichtung nach einem der vorangehenden Ansprüche, **dadurch gekennzeichnet, dass** der Entriegelungsknopf (6c) eine zumindest teilweise konkave Gestalt auf seiner in Richtung des Trägers (2) gerichteten Seite aufweist.

8. Spannvorrichtung nach einem der obigen Ansprüche, **dadurch gekennzeichnet, dass** die Betätigungseinrichtung (4) eine verlängerte Aussparung (5) aufweist und mit der Ausnehmung, welche lose den Träger (2) des Rahmens umgibt, befestigt ist, und dass der Entriegelungsknopf (6c) eine derartige Form aufweist, dass die Betätigungseinrichtung selbst die Stange (6) bewegt, wenn sie in Kontakt mit dem Knopf während der Bewegung von der neutralen Stellung in die aktive Stellung kommt und dass die Betätigungseinrichtung (4) durch die Stange (6) verriegelt bleibt, sobald sie die aktive Stellung erreicht.

## Revendications

1. Dispositif de tension de la ceinture de sécurité qui fixe un siège d'enfant à un siège de véhicule, comprenant : un siège d'enfant (1), un élément tendeur (3), un actionneur (4) servant à déplacer ledit élément tendeur entre une position neutre et une position active, et des moyens servant à verrouiller l'actionneur dans la position active, **caractérisé en ce que** lesdits moyens servant à verrouiller comprennent une tige épaulée (6) qui s'étend à travers une ouverture (9, 10) formée dans une barre (2) de l'armature du siège d'enfant (1), et un ressort (7) disposé autour de la tige et comprimé entre un épaulement de la tige et une surface intérieure (8) de ladite barre, ledit ressort poussant la tige vers une position d'interférence avec la trajectoire de l'actionneur (4), une extrémité de la tige ayant une zone élargie (6c) qui constitue un bouton de déverrouillage servant à provoquer un mouvement axial de la tige à l'encontre de l'action dudit ressort (7) pour la placer dans une position sans interférence avec la trajectoire de l'actionneur (4).

2. Dispositif de tension selon la revendication 1, **caractérisé en ce que** l'autre extrémité de la tige (6) possède une lèvre (11) qui reste à l'extérieur de la barre (2) de l'armature et se comporte comme une butée pour la position verrouillée de la tige.

3. Dispositif de tension selon la revendication 2, **caractérisé en ce que** ladite lèvre (11) est formée en rivant l'extrémité de la tige (6).

4. Dispositif de tension selon une quelconque des revendications précédentes, **caractérisé en ce que** ladite tige épaulée (6) possède une première partie (6a) qui est guidée pour coulisser dans une première ouverture (9) de forme complémentaire, formée dans la dite barre (2), et une deuxième partie (6b) de section inférieure à celle de la première partie, qui est guidée pour coulisser dans une deuxième ouverture (10) de forme complémentaire pratiquée dans ladite barre (2) et alignée avec ladite première ouverture (9).

5. Dispositif de tension selon la revendication 4, **caractérisé en ce que** ladite première partie (6a) est de section sensiblement carrée et ladite deuxième partie (6b) est de section sensiblement ronde.

6. Dispositif de serrage selon l'une ou l'autre des revendications 4 et 5, **caractérisé en ce que** la première partie (6a) de la tige (6) et le bouton de déverrouillage (6c) forment une seule pièce moulée en matière plastique, et ladite deuxième partie (6b) est constituée par une tige métallique attachée à ladite pièce en matière plastique.

7. Dispositif de tension selon une quelconque des revendications précédentes, **caractérisé en ce que** le bouton de déverrouillage (6c) a au moins en partie une forme concave sur son côté dirigé vers la barre (2).

8. Dispositif de tension selon une quelconque des revendications précédentes, **caractérisé en ce que** l'actionneur (4) possède une cavité allongée (5) et est montée de façon que ladite cavité entoure avec jeu la barre (2) de l'armature, et **en ce que** ledit bouton de déverrouillage (6c) a une forme telle que l'actionneur lui-même déplace la tige (6) lorsqu'il entre en contact avec le bouton pendant le mouvement allant de la position neutre à la position active, et telle que l'actionneur (4) reste verrouillé par la tige (6) une fois qu'il atteint ladite position active.
